# EUROPEAN PATENT APPLICATION

(11) **EP 0 970 661 A2**
(43) Date of publication of application: **12.01.2000**
(21) Application number: 99107626.6
(22) Date of filing: 16.04.1999
(51) Int. Cl.: A61B 19/00, G09B 23/28, G05G 9/04, G06F 3/00

(54) **Method and system for providing haptic feedback to the user of a catheter or similar elongated object**

(30) Priority: 10.07.1998 US 113962
(71) Applicant: MITSUBISHI DENKI KABUSHIKI KAISHA, Tokyo 100-8310 (JP)
(72) Inventor: Wendlandt, Jeffrey Michael, Cambridge, MA 02138 (US); Morgan, Frederick Marshall, Quincy, MA 02169 (US)
(74) Representative: Pfenning, Meinig & Partner

(57) **Abstract**

A surgical simulation system provides haptic feedback to a user of a set of catheters or similar elongated objects coupled to the system. The system employs an actuator assembly coupled to the objects and also to a workstation executing a surgical procedure simulation program. Each actuator in the actuator assembly is mechanically coupled to a corresponding object, and includes sensors that generate sense signals indicative of axial translation and rotation of the object by the user. The sense signals are provided to the workstation. In response, the workstation calculates axial forces and torques to be applied to the object as haptic feedback to the user, and provides drive signals representing the calculated axial forces and torques to the actuator assembly. Mechanisms within the actuators respond to the drive signals by applying corresponding axial force and torque to the tubes and the objects coupled thereto.

## Description

### BACKGROUND OF THE INVENTION

The present invention is related to the field of simulator systems that provide haptic or tactile feedback to a user, and more particularly to such simulators used to train physicians in the use of a set of catheters or similar tubular objects.

There is a trend toward increasing use of "minimally-invasive" surgical techniques, meaning techniques in which medical tools are inserted into a patient's body through a relatively small opening in the skin and manipulated from outside the body. In one example of a minimally invasive surgical technique known as "balloon angioplasty", concentric catheters are inserted into a patient's body and guided into a restricted blood vessel, such as a cardiac artery or a peripheral blood vessel suffering a blockage. One of the catheters, called a "balloon catheter" because it has a balloon-like inflatable chamber near the end, is guided into the blood vessel. The balloon-like chamber is inflated to stretch the vessel in the region of the blockage, so that the restricted passage is enlarged.

Because many of the minimally-invasive procedures now being practiced are relatively new, there is an increased need for training doctors or other medical personnel to perform the procedures. Traditionally, surgical training is performed on animals, cadavers or patients. These training methods all have drawbacks that make them either ineffective or undesirable in some cases. Animals are good for training, but expenses and ethical concerns limit their use. Cadavers are also expensive. Also, because the procedure is inherently complex and has associated risks, it is undesirable for inexperienced doctors to perform the procedure on human patients.

An alternative training method involves the use of a simulator. A simulator includes a set of sensors and actuators that interact with the tools being used by the doctor being trained. The simulator also includes a commuter that executes a simulation program that includes a model of the physical environment being simulated. For example, a simulator for diagnostic radiology includes a model of a catheter and a blood vessel in which the catheter is inserted and manoeuvred. The simulator senses movement or forces exerted on the tools by the doctor to track the position of the simulated catheter in the simulated vessel. When the simulation indicates that the catheter has bumped against a wall of the blood vessel, the simulator activates devices that provide forces to the tools that mimic the forces that would be experienced by the doctor during the real diagnostic radiology procedure.

It is generally desirable that a medical procedure simulator provide a high degree of realism, so that the maximum benefit is obtained from simulation-based training. In particular, it is desirable that a simulator be capable of mimicking the many combinations of forces and torques that can act on a tool during a medical procedure, these forces being commonly referred to as "haptic feedback". A simulator that provides realistic haptic feedback enables a doctor to better develop the skill required to manipulate a tool in the precise manner required by the procedure.

One known simulator uses an actuator manufactured by Bertec, Inc. of Columbus, Ohio. The Bertec actuator uses a mouse-like mechanism including a ball in contact with a catheter to sense the catheter's axial rotation and translation. The Bertec actuator also applies compression to the catheter to simulate frictional forces that act on the catheter and that are felt by the physician during a catheterization procedure.

The Bertec actuator suffers drawbacks. The ball used to sense translation and rotation is directly in contact with the catheter, and may slip on the catheter surface as the catheter is manipulated. Any such slippage reduces the accuracy of the position information provided by the actuator. Also, haptic feedback generated by compression alone is not very realistic. The Bertec device acts like a variable resistor, because the force fed back to the user is caused by the sliding and static friction from the compression device. During real catheterization, the catheter encounters moving elastic tissues which actively push back at the catheter when the tissues are stretched. The Bertec device cannot simulate such active forces, because it is a passive device. Also, simple compression cannot realistically simulate the effect of multiple forces or torques operating in different directions.

Other known actuators and actuator systems used for haptic feedback have features similar to the Bertec device, and thus suffer similar drawbacks.

It would be desirable to improve the realism of simulated medical procedures used in medical training in order to improve the quality of the training. In particular it would be desirable to have an actuator system having highly accurate sensors and actuators capable of providing realistic haptic feedback, so that physicians can train effectively before performing medical procedures on patients.

### BRIEF SUMMARY OF THE INVENTION

In accordance with the present invention, a method and system for providing haptic feedback to the user of an elongated object are disclosed. The translational and rotational positions of the object are tracked with high accuracy, and axial force and torque are applied to generate haptic feedback to a user of the object.

The disclosed haptic feedback system includes an actuator having sensors and motors. The sensors generate sense signals indicative of axial translation and axial rotation of the object. The motors apply independent axial force and axial torque to the object in response to drive signals. The system includes a processor coupled to the actuator. The processor uses the sense signals from the sensors to calculate a desired axial force and a axial torque to be applied to the object as haptic feedback to the user, and then generates the drive signals for the motors such that the motors apply the desired axial force and torque to the object. In this manner more realistic haptic feedback is achieved.

Other aspects, features, and advantages of the present invention are disclosed in the detailed description which follows.

### BRIEF DESCRIPTION OF THE SEVERAL VIEWS OF THE DRAWING

Figure 1 is a schematic diagram of prior art apparatus for catheterization of cardiac or peripheral vasculature including a set of concentric catheters;
Figure 2 is a schematic block diagram of a catheterization simulation system employing an actuator assembly according to the present invention;
Figure 3 is a perspective diagram of a first embodiment of an actuator assembly for the system of Figure 2 including schematically-depicted actuators;
Figure 4 is a diagram showing the coupling between catheters and corresponding tubes in the actuator assembly of Figure 3;
Figure 5 is a perspective diagram of an actuator in the actuator assembly of Figure 3;
Figure 6 is a front perspective diagram of a carriage assembly in the actuator of Figure 5;
Figure 7 is a front perspective diagram of the carriage assembly of Figure 6 holding a tube from the actuator assembly of Figure 3;
Figure 8 is a rear perspective diagram of the carriage assembly of Figure 6 showing a clamping member in an unclamped position;
Figure 9 is a rear perspective diagram of the carriage assembly of Figure 8 showing the clamping member in a clamped position;
Figure 10 is a perspective diagram of a second embodiment of an actuator assembly for the system of Figure 2 including schematically-depicted actuators; and
Figure 11 is a perspective diagram of an actuator in the actuator assembly of Figure 10.

### DETAILED DESCRIPTION OF THE INVENTION

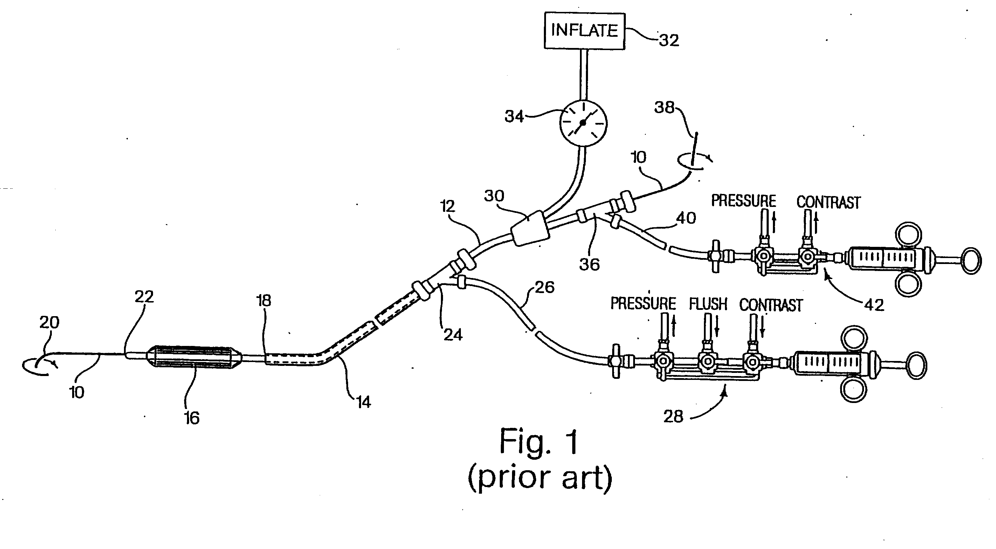

Apparatus for catheterization of cardiac or peripheral vasculature as is known in the art is illustrated in Figure 1. As illustrated, the apparatus includes an inner wire 10, a tubular balloon catheter 12, and a tubular guide catheter 14. The balloon catheter 12 includes a dilatation balloon 16 at one end that extends beyond a corresponding end 18 of the guide catheter 14. The wire 10 has a tip 20 that extends beyond the end 22 of the balloon catheter 12.

A first Y adaptor 24 is secured to the guide catheter 14. The balloon catheter 12 extends through one leg of the Y adaptor 24, and tubing 26 is attached to the other leg. The tubing 26 carries contrast and other solutions into the guide catheter 14. The contrast solution enhances the visibility of the vessel being catheterized on imaging equipment used during the catheterization process, enabling the doctor to better guide the catheter. The injection and flushing of the contrast and other solutions is controlled by apparatus 28 as is known in the art.

A coupling 30 enables the attachment of an inflation device 32 and associated pressure meter 34, along with a second Y adaptor 36. A user end 38 of the wire 10 extends from one leg of the Y adaptor 36 and tubing 40 extends from the other leg. The tubing 40 is connected to contrast injection and flushing apparatus 42 used to provide contrast and other solutions to the balloon catheter 12.

In the embodiment of Figure 1, the ends 20 and 38 of the wire 10 are bent slightly. At the user end 38 the bent section enables the wire 10 to be rotated about its longitudinal axis (also referred to herein as "axial rotation") by a doctor. At the inner or guide end 20, the bent section enables the wire 10 to be steered through turns and branches in the pathway to the vessel being catheterized.

During a balloon angioplasty procedure for a cardiac artery, the guide catheter 14 is first inserted into the femoral artery of a patient so that its end is at the aortic arch, near the opening of a cardiac artery to be operated upon. The guide catheter 14 arrives at this position by being slid along a previously-inserted guide wire (not shown), which is removed after the guide catheter 14 is in place. Next, the balloon catheter 12 and wire 10 together are pushed through the guide catheter 14 to its end. The wire 10 is then manipulated into the artery to the area to be dilated, and the balloon 16 is pushed along the wire 10 into the desired position. In this position the balloon 16 is inflated as necessary to achieve the desired dilation of the artery.

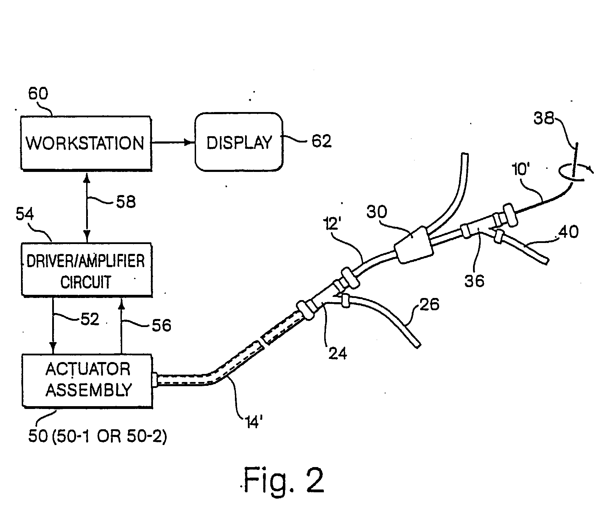

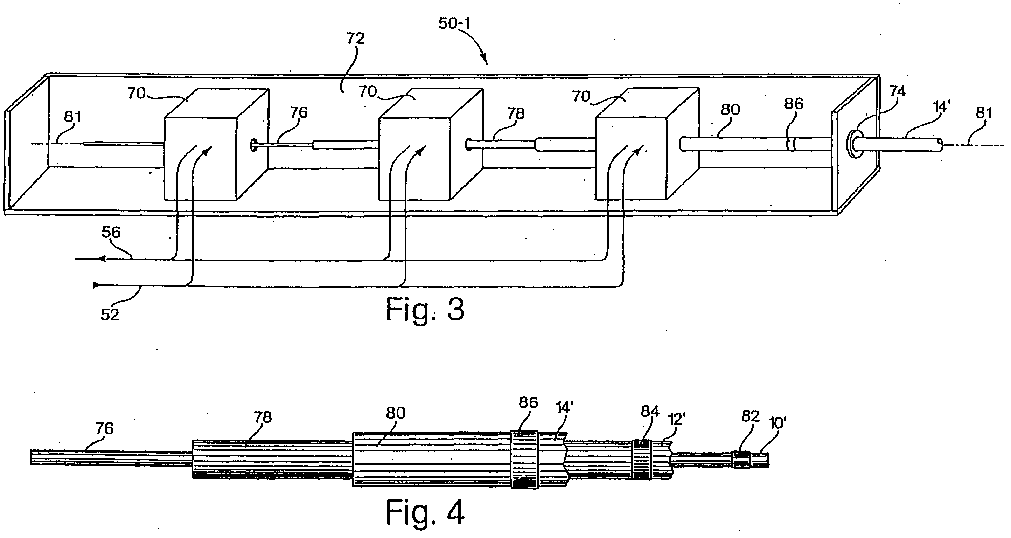

Figure 2 depicts a surgical simulation system for simulating the catheterization process. Catheterization apparatus like that in Figure 1 is used. The contrast control apparatus 28 and 42 and the inflation devices 32 and 34 are not shown in Figure 2, because the simulation system may be used with or without these components. Wire 10' and catheters 12' and 14' are similar to wire 10 and catheters 12 and 14 shown in Figure 1, except as described below with reference to Figures 3 and 4.

The wire 10' and catheters 12' and 14' enter an actuator assembly 50, which may be either of two different actuators 50-1 and 50-2 described below, The actuator assembly 50 receives electrical drive signals 52 from an electrical driver and amplifier circuit 54, and provides electrical sense signals 56 to the circuit 54. The circuit 54 is in turn connected via a bus 58 to a workstation or similar computer 60 having a display 62.

The actuator assembly 50 contains sensors that sense axial translation and rotation of the wire 10' and catheters 12' and 14' caused by the user of the simulator. Information about rotational and translational positions are provided to the workstation 60 via the sense signals 56 over bus 58. The actuator assembly 50 also applies axial forces and torques to the wire 10' and catheters 12' and 14' in response to the drive signals 52 generated according to data provided to the driver circuit 54 by the workstation 60 over bus 58.

The driver/amplifier circuit 54 contains digital-to-analog converters, analog-to-digital converters, and related circuity to translate between commands and data on the digital interface bus 58 and analog values of the drive signals 52 and sense signals 56.

The workstation 60 executes a simulation program that simulates relevant portions of patient's anatomy and the catheterization process, including the presentation of images on the display 62 depicting the travel of simulated extensions of the wire 10' and catheters 12' and 14' along simulated blood vessels. The workstation 60 uses the data from the sense signals 56 to sense, the manipulation of the wire 10' and catheters 12' and 14' by the user, and the workstation 60 controls the actuator assembly 50 via drive signals 52 to provide active haptic or tactile sensations to the user, to realistically simulate the catheterization process.

More specifically, the simulation begins with the guide catheter 14' almost fully inserted in the simulator; this corresponds to the above described position of the real catheter 14 at the top of the aortic arch. The display 62 shows an image of a simulated guide catheter in the aortic region. The user then pushes the balloon catheter 12' and wire 10' into the guide catheter; their simulated counterparts appear on the display when they reach the opening at the far end of the guide catheter. From this point the wire 10' and balloon catheter 12' are manipulated separately, and their simulated counterparts are moved correspondingly on the display 62.

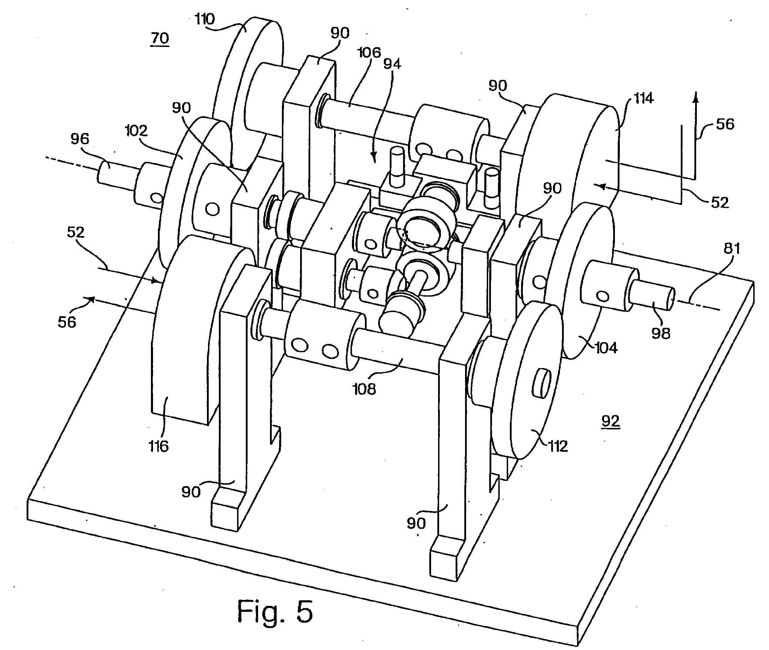

Figure 3 shows a first embodiment of an actuator assembly 50-1 that can be used in the simulation system of Figure 2. Three actuators 70 are disposed on a base 72 within a housing. Although the actuators 70 are shown as boxes, this representation is schematic only; details of the actuators 70 are shown in Figures 5 - 9 described below. At one end of the base 72, the wire 10' and catheters 12' and 14' enter the base 72 at one end through a sleeve or grommet 74. A set of stiff concentric tubes 76, 78 and 80 are disposed in telescoping fashion through the actuators 70 along an actuation axis 81. As shown in Figure 4, the wire 10' and the catheters 12' and 14', are connected to corresponding tubes 76, 78 or 80 by corresponding couplers 82, 84 or 86. The couplers 82, 84 and 86 may be pieces of tape, or more complicated automated mechanical devices that provide secure mechanical coupling between each of the corresponding tubes and the respective catheter.

The innermore tubes 76 and 78 each extend beyond their respectively adjacent outer tubes 78 and 80 in order to permit engagement by a corresponding one of the actuators 70. The amount by which each of the innermore tubes 76 and 78 extends beyond the corresponding outermore tube 78 or 80 is chosen to enable each tube o freely travel between a retracted position (toward the right in Figure 3) and an extended position (toward the left in Figure 3) without interfering with the travel of the other tubes. The retracted position corresponds to the initial position of the corresponding real wire 10 or catheter 12 or 14 upon being inserted into the femoral artery of a patient; the extended position corresponds to the final position of the corresponding real wire 10 or catheter 12 or 14 after it has been pushed into the vicinity of the vessel being catheterized.

The actuators 70 are placed so that each one engages the corresponding tube 76, 78 or 80 throughout its travel and does not present an obstacle to the travel of the other tubes. Each actuator 70 senses the axial translation and axial rotation of the corresponding tube 76, 78 or 80 with sensors which are described below in greater detail. The sensors provide indications of axial translation and rotation via the sense signals 56. Each actuator 70 includes motors which are responsive to corresponding ones of the drive signals 52 to generate axial force and torque on the corresponding tube 76, 78 or 80. The actuators 70 are described in greater detail below.

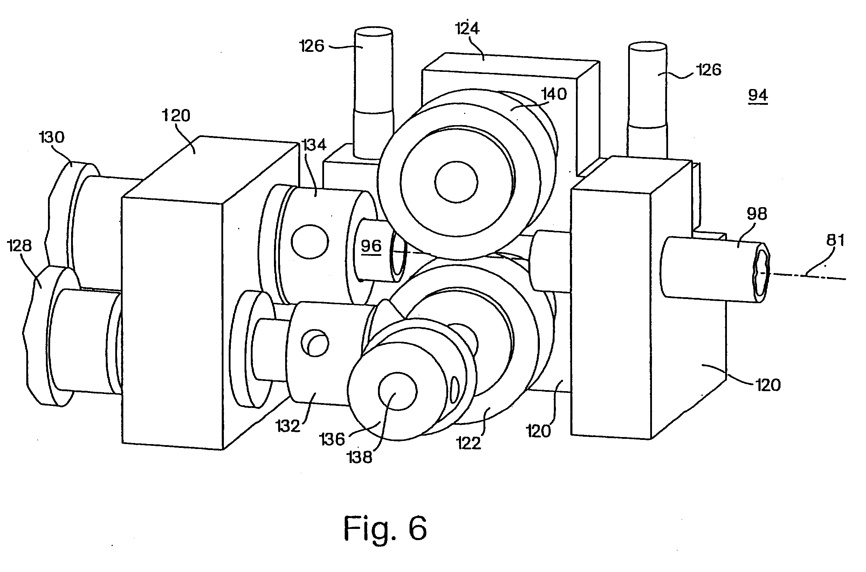

Figure 5 shows one embodiment of an actuator 70. Support pedestals 90 extend from a base 92. One pair of the support pedestals 90 supports a carriage assembly 94 via shaft segments 96 and 98 disposed through openings in the pedestals 90 along the actuation axis 81. Also supported on the shaft segments 96 and 98 are a translation control wheel 102 and a rotation control wheel 104. The carriage assembly 94 and rotation control wheel 104 are both secured to the shaft 98, so that rotation of the rotation wheel 104 causes rotation of the carriage assembly 94 about the actuation axis 81. The coupling between the translation control wheel 102 and the carriage assembly 94 is described in greater detail below with respect to Figure 6.

Additional pairs of support pedestals 90 support drive shafts 106 and 108 in parallel with the actuation axis 81. Each drive shaft 106 and 108 extends through openings in the corresponding pair of support pedestals 90. Drive wheels 110 and 112 are mounted on the drive shafts 106 and 108, respectively. The drive wheel 110 engages the translation control wheel 102, and the drive wheel 112 engages the rotation control wheel 104.

Motor/sensor assemblies 114 and 116 are mechanically coupled to the drive shafts 106 and 108, respectively. Motors within the assemblies 114 and 116 apply torque to the corresponding drive shaft 106 or 108 in response to the drive signals 52. These motors are preferably direct-current (DC) torque motors. The sensor within each assembly 114 and 116 senses the rotational position of the corresponding co-located motor. The sensors may be conventional rotary position encoders or any other suitable devices. The sensor generate sense signals 56 indicating the signals 56 indicating the sensed positions of the respective wheel 102 or 104. The signals 56 may be, for example, respective series of pulses, in which each pulse represents a quantum of rotation of the corresponding motor.

The signal 56 generated by the sensor within the assembly 116 indicates the rotational position of the tube disposed within the actuator 70. The signal 56 generated by the sensor within the assembly 114 provides both rotation and translation information, because of the configuration of the gears on the carriage assembly 94 as described below. Thus in order to obtain the translational position of the tube, the signal 56 from the assembly 114, which indicates purely rotation, is subtracted from the signal 56 from the assembly 116 indicating both rotation and translation.

During operation of the actuator 70 of Figure 5, one of the tubes 76, 78 or 80 is disposed through the actuator 70 along the actuation axis 81. The user pushes, pulls, and rotates the tube. Pushing and pulling motions of the tube cause the wheel 102 to rotate, and rotation of the tube causes both wheels 102 and 104 to rotate. The rotation of the wheels 102 and 104 is detected by the encoders within the assemblies 114 and 116, and the values of the signals 56 generated by the encoders change correspondingly. The workstation 60 of Figure 2 receives the position information via the circuit 54. In accordance with the simulation program being executed, the workstation 60 causes the drive signals 52 to take on values corresponding to the desired force and torque to be applied to the tube. These signals drive the motors within the assemblies 114 and 116. The motors apply the desired force and torque via the shafts 106 and 108, the wheels 110 and 112, and the wheels 102 and 104.

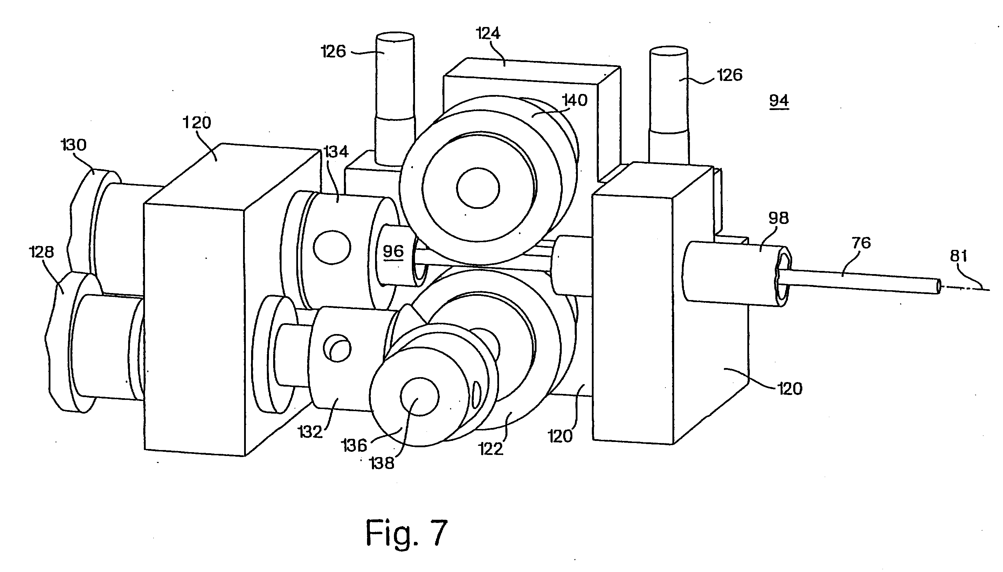

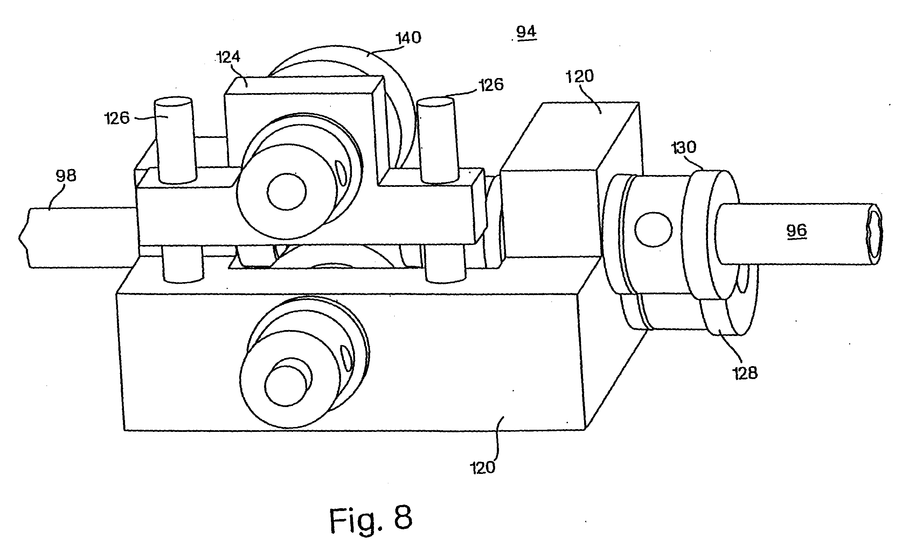

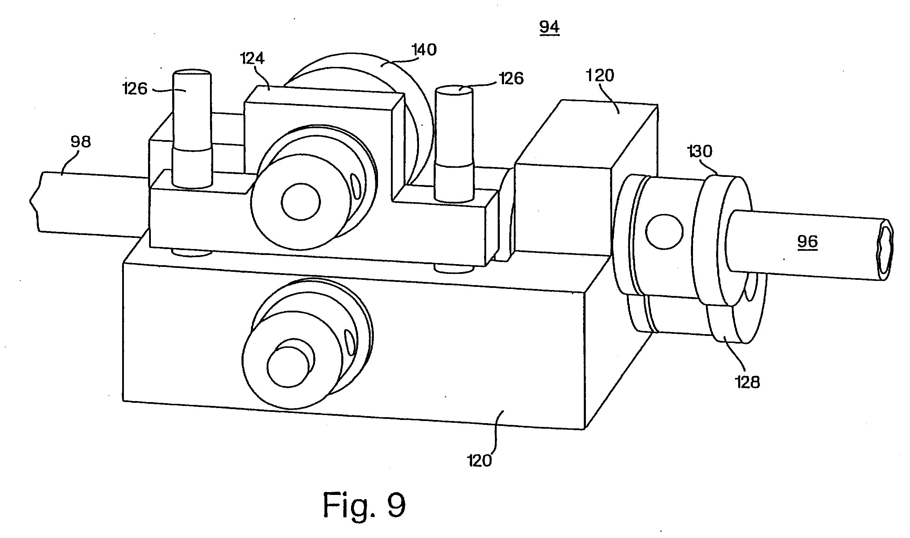

Figures 6 - 9 provide further views of the carriage assembly 94. Figure 6 is a frontal perspective view of the carriage assembly 94 alone; Figure 7 is frontal perspective view of the carriage assembly 94 in which wheels 140 and 122 engage a tube 76; Figure 8 is a rear perspective view of the carriage member 94 in an unclamped position; and Figure 9 is a rear perspective view of the carriage member 94 in a clamped position.

A three-sided carriage body 120 provides support for the following components: the shaft segments 96 and 98; a drive pinch wheel 122; a clamp member 124 supported by posts 126; mutually engaged wheels or gears 128 and 130; a miter wheel or gear 132 mounted on the same shaft as the wheel 128; and a collar 134 mounted on the same shaft as the wheel 130. The miter wheel 132 engages another miter wheel or gear 136 mounted on the same shaft 138 as the drive pinch wheel 122. An idle pinch wheel 140 is mounted on the clamp member 124.

The carriage body 120 is secured to the shaft segment 98 so that rotation of the shaft segment 98 about the axis 81 causes the carriage 94 to rotate about the axis 81. The wheel 130 and retaining collar 134 are mounted on the body 120 such that the wheel 130 can rotate about the axis 81 independent of rotation of the body 120 about the axis 81. The wheel 128 and miter wheel 132 are also mounted to rotate freely with respect to the body 120. Accordingly, the wheel 130 can impart rotation to the miter wheel 132 via wheel 128 independent of rotation of the body 120 about the axis 81.

In preparation for use of the actuator 70, the clamp member 124 is brought to the unclamped position depicted in Figure 8. The tube 76, 78 or 80 is inserted through the shaft segments 96 and 98 along the actuation axis 81. The clamp member 124 is then brought to the clamped position of Figure 9, such that the pinch wheels 122 and 140 engage the tube as shown in Figure 7. Although not shown in the Figures, the posts 126 are preferably threaded in order to help secure the clamp member 124 to the body 120. A pair of springs is preferably disposed on each post 126, one between the body 120 and the clamp member 124 and one between the clamp member 124 and a retaining nut threaded onto the post 126. The clamp member 124 is moved between the clamped and unclamped positions by adjustment of the retaining nuts.

During operation of the actuator 70, rotation of the tube by a user results in rotation of the carriage assembly 94 about the axis 81. This rotation has two effects. The rotation is communicated to the encoder within the assembly 116 via shaft 98, wheels 104 and 112, and shaft 108 of Figure 5. The rotation is also communicated to the encoder within assembly 114 by the following mechanism: The wheel 128 revolves about the axis 81 as the carriage 94 rotates. However, for pure rotation the wheel 128 does not rotate at all relative to wheel 120. Therefore the wheel 130 is caused to rotate by the non-rotating wheel 128. The rotation of wheel 130 is communicated to the encoder within assembly 114 by the shaft 96, the wheels 102 and 110, and the shaft 106 of Figure 5.

Axial translation of the tube by a user causes the pinch wheels 122 to rotate, in turn causing miter wheels 136 and 132 to rotate. This rotation is communicated to the assembly 114 via wheels 128 and 130, along with the shaft 96, the wheels 102 and 110, and the shaft 106 of Figure 5.

Haptic feedback is provided to the user by the application of axial forces and torques to the tube by the motors within the assemblies 114 and 116. The mechanical paths by which the torque of the motors is communicated to the tube are the reverse of the above described paths by which user-generated movements are communicated to the encoders.

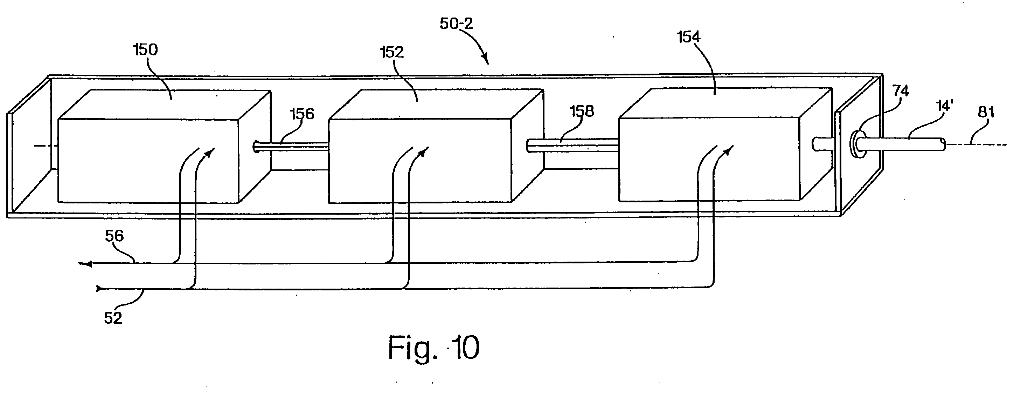

Figure 10 shows a second embodiment of an actuator assembly 50-2 employing three actuators 150, 152, and 154 represented schematically. Like the actuator 70, the actuators 150, 152 and 154 perform both sensing and actuation for both translation and rotation. The actuators 150, 152 and 154 are generally similar to each other in construction. Each actuator engages a different-sized rigid tube having a square cross-section. The tubes 156 and 158 shown in Figure 10 are attached to the catheter 12' and the wire 10', while a tube (not shown in Figure 10) within actuator 154 is attached to the catheter 14'. Because of the manner in which each actuators 150, 152 and 154 engages the corresponding tube, there are minor differences in their internal structure as described below.

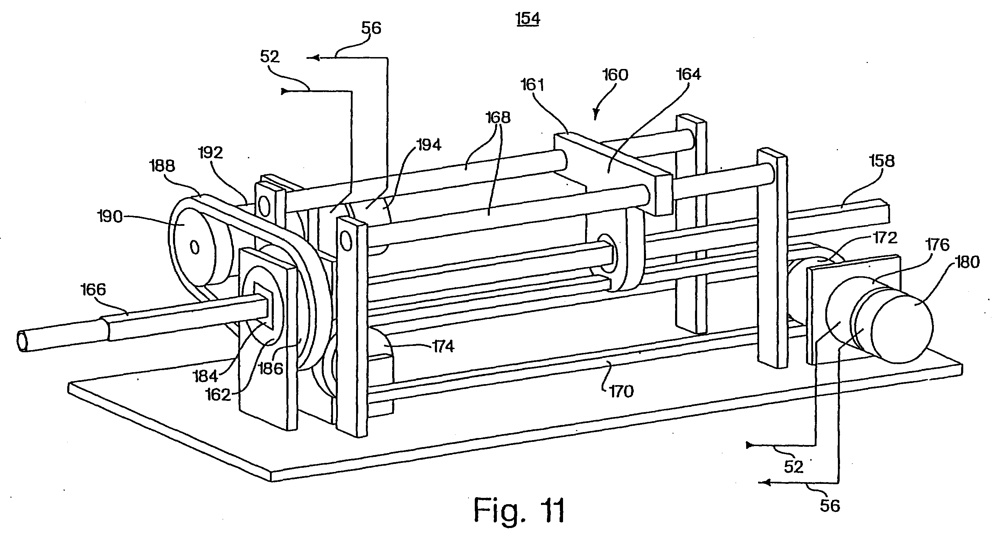

Figure 11 shows the actuator 154 used with the outermost catheter 14'. The actuator 154 has a linear actuator 160 and a rotary actuator 162. The linear actuator 160 includes a generally T-shaped carrier 161 and a rotary bearing 164 that grips a tube 166 but allows the tube to be rotated about its longitudinal axis. The tube 166 is attached to the outermost catheter 14'. The linear actuator 160 slides along rails 168, and is attached to a cable loop or belt of cable 170 extending between a drive pulley 172 and an idle pulley 174. The drive pulley 172 is rotated by a motor 176, and its rotary position is sensed by a position encoder or sensor 180. As the linear actuator 160 moves along the rails 168, the tube 166 moves along its axis while its rotational position is unconstrained.

The rotary actuator 162 includes a linear bearing 184 having a square opening through which the tube 166 passes. The linear bearing 184 tracks and controls the rotational position of the tube 166 while allowing the tube to be translated along its longitudinal axis. The rotary actuator 162 is also attached to a pulley 186 driven by a cable loop or belt 188, a drive pulley 190, and a motor 192. A rotary position encoder 194 senses the rotary position of the drive pulley 190. As the rotary actuator 162 rotates, the tube 166 also rotates along its longitudinal axis while its translational position is unconstrained. In the illustrated embodiment the tube 166 is constrained to rotate with rotary actuator 162 due to its square cross section. In alternative embodiments, the tubes within the actuators 150, 152 and 154 may have other cross-sectional shapes that constrain rotation, such as triangular, hexagonal, spline, etc.

The actuators 150 and 152 of Figure 10 are essentially the same as the actuator 154, except that the bearings 162 and 164 are made to accommodate the narrower tubes 156 and 158. Also, it should be noted that the tube 158 is sufficiently narrower than the tube 166 to rotate independently within it, and likewise tube 156 rotates within tube 158. The belts 170 and 188 are preferably steel cables or bands riding within grooves in the rims of the pulleys 172, 174, 186, and 190. Alternatively, the pulleys may be sprocket-like wheels, and the belts 170 and 188 may be chain or of alternative construction with an undulating inner surface for engaging the teeth on the sprocket-like pulleys.

The foregoing has described an actuation system useful for providing haptic feedback to the user of an elongated object such as a catheter. It will be apparent to those skilled in the art that modification to and variation of the above-described methods and apparatus are possible without departing from the inventive concepts disclosed herein. In particular, the system may be used with medical procedures other than the catheterization of cardiac or peripheral vasculature, such as for example interventional radiology, urology, and other catheter-like procedures. Accordingly, the invention should be viewed as limited solely by the scope and spirit of the appended claims.

## Claims

1. A system for generating haptic feedback in response to axial translation and axial rotation of an elongated object by a user, comprising:
an actuator mechanically coupled to the object, the actuator including sensors operative to generate sense signals indicative of axial translation and axial rotation of the object, and including motors operative to apply axial force and axial torque to the object in response to drive signals applied to the actuator; and
a processor coupled to the actuator, the processor being operative to calculate in response to the sense signals a desired axial force and a desired axial torque to be applied to the object as haptic feedback to the user, the processor also being operative to generate the drive signals such that the desired axial force and torque are applied to the object by the actuator.

2. A system according to claim 1, wherein the actuator comprises:
a support;
a carriage mechanism on the support configured to hold the object in a manner allowing for axial translation and axial rotation thereof, the carriage mechanism being operative when holding the object to apply mutually independent axial force and axial torque to the object in response to torques applied to rotatable input components of the carriage mechanism; and
motors mechanically coupled to the rotatable input components of the carriage mechanism, the motors receiving the drive signals generated by the processor, the motors being coupled to the input components of the carriage mechanism such that torques are applied thereto by the motors in accordance with the received drive signals.

3. A system according to claim 1, wherein the actuator comprises:
a linear bearing having an interior portion surrounding a central opening through which the object extends, the interior portion being cooperatively configured with the object such that the linear bearing is operative to control rotation of the object about its longitudinal axis while allowing translation of the object along its longitudinal axis;
a rotary bearing having an interior portion surrounding a central opening through which the object extends, the interior portion being cooperatively configured with the object such that the rotary bearing is operative to control translation of the object along the longitudinal axis thereof while allowing the object to be rotated about the longitudinal axis; and
two motors, the motors receiving the drive signals generated by the processor, the motors being coupled respectively to the linear bearing and the rotary bearing to control the rotation of the object about its longitudinal axis and the translation of the object along its longitudinal axis in accordance with the received drive signals.

4. A system according to claim 1, wherein the object is a catheter or wire, and wherein the processor is operative when calculating the desired axial force and torque to execute a simulation program that simulates the catheterization or cardiac or peripheral vasculature, the calculated axial force and torque being values of axial force and torque that would be experienced by the user as haptic feedback during real catheterization, the system further comprising a display device coupled to the processor, the display device being operative to display images generated by the processor depicting the travel of a simulated extension of the catheter or wire along a simulated blood vessel.

5. A system for generating haptic feedback in response to axial translation and axial rotation of a set of elongated, concentric, tubular objects by a user, comprising:
a plurality of actuators, each actuator being mechanically coupled to a corresponding one of the objects, each actuator including sensors operative to generate sense signals indicative of axial translation and axial rotation of the coupled object, each actuator being operative to apply axial force and axial torque to the coupled object in response to drive signals applied to the actuator; and
a processor coupled to the actuators, the processor being operative to calculate in response to the sense signals desired axial forces and desired axial torques to be applied to the respective objects as haptic feedback to the user, the processor also being operative to generate the drive signals such that the desired axial forces and torques are applied to the objects by the actuators.

6. A system according to claim 5, wherein:
(i) the actuators are part of an actuator assembly comprising:
an elongated base configured at one end to support one end of the set of concentric objects on an actuation axis extending in the direction of elongation of the base; and
a set of elongated, concentric, rigid tubes disposed in telescoping fashion along the actuation axis, the rigid tubes being configured at one end for coupling to corresponding ones of the concentric objects, each tube having a retracted position corresponding to retraction of the object to which the tube is to be coupled, each tube also having an extended position corresponding to a desired maximum extension of the object to which tube is to be coupled, each tube when in the retracted position extending beyond the adjacent outermore tube when in the extended position; and
(ii) the actuators are disposed in spaced-apart relation on the base of the actuator assembly along the actuation axis, a first actuator engaging the outermost tube near the one end of the base, each successive actuator engaging a successively-innermore one of the tubes at a corresponding location along the actuation axis beyond the extended position of the adjacent outermore tube, each actuator being operative to translate the corresponding tube along the actuation axis and to rotate the corresponding tube about the actuation axis in response to actuation signals applied to the actuator.

7. A system according to claim 5, wherein the objects are catheters.

8. A system according to claim 5, wherein the objects are a catheter and a wire.

9. A method of generating haptic feedback to the user of an elongated object, comprising the steps of:
generating sense signals indicative of the respective magnitudes of axial translation and axial rotation of the object by he user;
calculating in response to the sense signals a desired axial force and a desired axial torque to be applied to the object as haptic feedback to the user;
generating drive signals indicative of the desired axial force and axial torque to be applied to the object; and
applying axial force and axial torque to the object in accordance with the drive signals.

10. A method according to claim 9, wherein the object is a catheter or wire, and wherein the step of calculating desired axial force and torque comprises executing a simulation program that simulates the catheterization of cardiac or peripheral vasculature, the calculated axial force and torque being values of axial force and torque that would be experienced by the user as haptic feedback during real catheterization.

11. A method according to claim 10, further comprising the step of presenting images on a display device depicting the travel of a simulated extension of the catheter or wire along a simulated blood vessel.
